# EUROPEAN PATENT SPECIFICATION

(11) **EP 3 241 786 B1**
(45) Date of publication and mention of the grant of the patent: **04.08.2021**
(21) Application number: 17168348.5
(22) Date of filing: 27.04.2017
(51) Int. Cl.: B65G 47/38

(54) **APPARATUS FOR TRANSPORTING SAUSAGES**
VORRICHTUNG ZUM TRANSPORTIEREN VON WÜRSTEN
APPAREIL POUR TRANSPORTER DES SAUCISSES

(30) Priority: 02.05.2016 DE 202016002834 U
(43) Date of publication of application: 08.11.2017
(73) Proprietor: Tipper Tie technopack GmbH, 21509 Glinde (DE)
(72) Inventor: Aderhold, Uwe, 21529 Kröppelshagen (DE)
(74) Representative: Glawe, Delfs, Moll

(56) References cited:
- WO-A1-2009/022908
- WO-A1-2009/022908
- DE-A1-102013 212 745
- DE-A1-102013 212 745
- US-A- 5 885 150
- US-A- 5 885 150

## Description

The invention relates to a devices for transporting sausages from a clip machine.

Clip machines are primarily used in sausage production to close the ends of the sausages with clips. In today's production, one has rely to a quick and reliable removal of the finished clipped sausage from the machine, so that the machine can work as quickly as possible on the next sausage. For this removal, conveying devices are used, usually slides, roller conveyors and treadmills. US patent 5885150 discloses a conveyor used for transporting sausages from a clip machine.

Particularly in the case of very long sausages, it is desirable, for reasons of space, to remove the transported sausage laterally from the conveying device, for example, to place it on a table. For automatic removal, baffle plates are known, which are arranged above the conveying device and press the sausage aside. Furthermore, pusher plates are known which push the sausage away from the side. In the case of roller conveyors, it is known to introduce pusher fingers up from below between the rollers which also push the sausage to the side. Finally, it is possible to pivot the conveying device downwards so that the sausage can fall onto a table which, however, must then be arranged below an ergonomically favorable work level.

All these measures have in particular the disadvantage that they discharge the sausage uncontrolled. Depending on where the sausage hits the baffle plate, it receives a different path of movement. Depending on where the sausage in the case of the other measures on the conveying device is located, it receives different accelerations. For an operator who has to seize the sausages in rapid succession on the table, this means that they must constantly seize differently. An automated seizing is correspondingly made difficult.

The invention is thus based on the object to enable a controlled discharge as far as possible. It achieves this by a device for transporting sausages according to claim 1 and a clip machine including such device, according to claim 10. The subclaims relate to advantageous further developments.

Sausages are understood to mean food products in which pasty or granule-like filling material, for example sausage meat, is filled into a packing sleeve open on one or both ends, for example sausage casing, and the open end or open ends is or are closed with a clip. Clips are U-shaped, plastically deformable closure elements, which limbs are bent around the packing sleeve for forming the closure. A clip machine is a device for attaching the clips by making this bend. For this purpose, it can have necking elements by means of which the filled packaging sleeve is constricted onto a small cross-section, which can be encompassed by the limbs of a clip.

The conveying device according to the invention has a conveying plane, i.e. a plane on which the sausage would be conveyed without the inclination in a stable position. In the case of a treadmill, the conveying plane would be defined by the upper run, in the case of a roller conveyor through the axes of the rollers plus its radius, and in the case of a planar slide plate through the plate surface. The inclination according to the invention has to be selected in such a way that the sausage along the conveying plane would slip or roll from the conveying device when it would not be prevented by the pivot support. Preferably the inclination to the horizontal is 10° to 40°, more preferably 15° to 30°. Accordingly, the pivot support according to the invention is constituted such that it prevents this slipping or rolling in its support position. However, if the pivot support is pivoted into its release position, the sausage slides or rolls off laterally from the conveying device.

The position of the sausage during and at the end of the transport and thus at the beginning of the discharge is precisely defined by the support on the conveying device and simultaneous abutment on the pivot support. Since, furthermore, the weight of the sausage is used as the force for the shedding, the acceleration and thus the path of movement of the sausage are precisely defined. In this way, the invention achieves a controlled discharge compared to the prior art. Sausages of the same size and of the same weight always come out of the device in the same way, which promotes a quick manual as well as a machine gripping.

Advantageously, the inclination axis runs horizontally. This supports the aim of the controlled discharge. The conveying device should then preferably be a roller conveyor or a treadmill. The latter is particularly advantageous, since treadmills are particularly suitable for removal of long sausages, i.e. at least 50 cm, 100 cm or 150 cm length. In the case of such sausages, the invention is particularly effective, since an uncontrolled discharge is particularly hindering for a high production speed.

Advantageously, the pivot axis is arranged on the upper side. As a result, the lower edge of the pivot support pivots away from the treadmill. This allows small pivot angles and thus a higher working speed. Furthermore, the sausage can reach a table directly or via a slide plate, that is not only via the pivot support.

Advantageously, the pivot support is a roller conveyor whose roller axes are perpendicular to the conveying direction. This facilitates the removal. In this case, it is particularly advantageous, if the roller conveyor has baffle plates between its rollers. Since the sausage presses on the pivot support only with a small force component, it is sufficient to facilitation of the transport, if some of them are replaced by baffle plates. The friction caused by the sausage being placed on baffles is acceptable, whereas baffles are much easier to clean than rollers. With the combination of alternating rollers and baffle plates thus creates a roller conveyor, which is particularly suitable for the present application, so that the invention also consists in this.

Advantageously, the device according to the invention has, in the conveying direction upstream of the pivot support, an intermediate support which is aligned with the pivot support in its support position and can remain in this position even when the pivot support is pivoted. This intermediate support can support the front end of a trailing sausage. Thus it possible to start the production of the trailing sausage before the discharge of the front is completed. It is therefore not necessary to wait until the pivot support has pivoted back from the release position into the support position. An alignment according to the invention is present when the intermediate support is positioned in such a way that it can assume the supporting function for a trailing sausage instead of the pivot support. Advantageously, the intermediate support can also be a roller conveyor, more advantageously likewise such a one which has baffle plates between its rollers.

Advantageously, the device has a control unit for automatically triggering the pivoting of the pivot support. Thus the device can operate independently. In this case, it is also advantageous if the device has means for detecting the position of the sausage on the conveying device in order to create a signal for the control unit for triggering the pivoting of the pivot support. Said means can be in a sensor for detecting the sausage, which can, for example, work mechanically as a light barrier optically or, for example, with a stop plate. A sensor, which triggers an electrical signal for the control unit, is then actuated via the stop plate. The sensor may be, for example, an inductive sensor. Also conceivable is a sensor which detects the position of the treadmill, for example via optical markings attached thereto. In the case of a servo-controlled treadmill, the position can also be queried via the position of the motor.

Subsequently, embodiments of the invention are explained with reference to drawings. Here:
- Fig. 1: is a schematic view of a device according to the invention arranged above a table plate for transporting sausages from a clip machine;
- Fig. 2: is a view of a clip machine with such a device and a table.

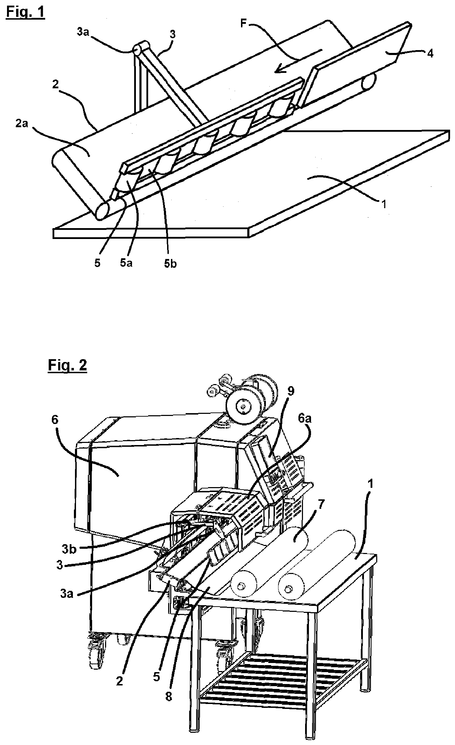

Fig. 1 shows a treadmill 2 arranged above a table plate 1, the upper run 2a of which forms a conveying plane for a sausage (not shown) which is to be transported in the conveying direction indicated by the arrow F. The treadmill is inclined about the conveying direction F. In order that the sausage does not slip or roll as a result of the inclination of the treadmill, a support plate 4 is arranged at the beginning of the conveying path fixedly and thus non-pivotably, to which a roller conveyor 5 adjoins in the course of the conveying path. The rollers 5a of the roller conveyor support the sausage and, at the same time, ensure that the movement sausage is opposed to as little as possible a frictional resistance. However, the roller conveyor 5 is not supported by rollers 5a. Rather, baffle plates 5b which are easier to clean are arranged between two rollers 5a.

The roller conveyor 5 is supported by a support arm 3, which at 3a has a joint which allows the roller conveyor to be pivoted up around an axis parallel to the direction F. The joint 3a can also be arranged elsewhere in the support arm 3, for example directly on the roller conveyor 5, so that it's upper edge approximately coincides with the pivot axis. In this case, the design would be particularly space-saving. In both cases, the pivot axis is arranged on the upper side. The space saving also occurs when the support arm 3 grips transversely over the treadmill 5.

FIG. 2 shows a device according to the invention arranged in a clip machine 6, which is approximately half covered by a protective housing 6a. In this case, the space-saving top-side arrangement pivot axis in the joint 3a for the roller conveyor 5 proves to be particularly favorable. A cylinder 3b actuated fluidically, preferably pneumatically, effects the pivoting movement. This is triggered by the control unit 9, which can also be designed as a central control unit of the machine 6 for controlling further sequences on the machine 6. Unlike in FIG. 1, the roller conveyor shown in FIG. 2 is equipped with rollers 5a, i.e. without baffle plates. The device is suitable for the controlled discharge of particularly large sausages 7. A, in the exemplary embodiment angled, deflecting plate 8, which is fastened below the treadmill to the inventive device, bridges the distance between the treadmill 2 and the table plate 1.

## Claims

1. Device for transporting sausages (7) from a clip machine (6) comprising a conveying device (2) having a conveying plane defined by the upper run of an endless conveyor belt or by the axis plus radius of rollers of a roller conveyor or by the plate surface of a planar slide plate, on which the sausage (7) is transported in a conveying direction (F), **characterized in that** the conveying plane is inclined arranged around an inclination axis running parallel to the conveying direction (F) and a pivot support (5) is arranged along the lower lying longitudinal side of the conveying device (2) due to the inclination, which is pivotable around a pivot axis running parallel to the conveying direction (F) between a support position and a release position.

2. Device according to claim 1, **characterized in that** the inclination axis runs horizontally.

3. Device according to one of the preceding claims, **characterized in that** the conveying device (2) is a treadmill.

4. Device according to one of the preceding claims, **characterized in that** the pivot axis is arranged on the upper side.

5. Device according to one of the preceding claims, **characterized in that** the pivot support (5) is a roller conveyor (5) whose roller axes are perpendicular to the conveying direction (F).

6. Device according to claim 5, **characterized in that** the roller conveyor (5) has baffle plates (5b) between its rollers (5a).

7. Device according to one of the preceding claims, **characterized in that** it has, in the conveying direction (F) upstream to the pivot support (5), an intermediate support (4) which is aligned with the pivot support (5) in its support position and can also remain in this position when the pivot support (5) is pivoted.

8. Device according to one of the preceding claims, **characterized in that** it has a control unit (9) for automatically triggering the pivoting of the pivot support (5).

9. A device according to claim 8, **characterized in that** it has means for detecting the position of the sausage (7) on the conveying device (2) in order to create a signal for the control unit for triggering the pivoting of the pivot support.

10. A clip machine having a device for transporting sausages from the machine with a treadmill, **characterized in that** the device for transporting is constructed according to one of the claims 1 to 9.

## Patentansprüche

1. Vorrichtung zum Transportieren von Würsten (7) von einer Clipmaschine (6), umfassend eine Fördervorrichtung (2) mit einer Förderebene, die definiert ist durch den oberen Lauf eines Endlosförderbands oder durch die Achse plus den Radius der Rollen eines Rollenförderers oder durch die Plattenoberfläche einer planaren Gleitplatte, worauf die Wurst (7) in einer Förderrichtung (F) transportiert wird,
**dadurch gekennzeichnet, dass** die Förderebene geneigt um eine Neigungsachse, die parallel zur Förderrichtung (F) verläuft, angeordnet ist und eine Schwenkstütze (5) aufgrund der Neigung entlang der unteren liegenden Längsseite der Fördervorrichtung (2) angeordnet ist, die um eine Schwenkachse, die parallel zur Förderrichtung (F) zwischen einer Stützposition und einer Freigabeposition verläuft, schwenkbar ist.

2. Vorrichtung nach Anspruch 1, **dadurch gekennzeichnet, dass** die Neigungsachse horizontal verläuft.

3. Vorrichtung nach einem der vorhergehenden Ansprüche, **dadurch gekennzeichnet, dass** die Fördervorrichtung (2) ein Laufband ist.

4. Vorrichtung nach einem der vorhergehenden Ansprüche, **dadurch gekennzeichnet, dass** die Schwenkachse an der Oberseite angeordnet ist.

5. Vorrichtung nach einem der vorhergehenden Ansprüche, **dadurch gekennzeichnet, dass** die Schwenkstütze (5) ein Rollenförderer (5) ist, dessen Rollenachsen senkrecht zur Förderrichtung (F) sind.

6. Vorrichtung nach Anspruch 5, **dadurch gekennzeichnet, dass** der Rollenförderer (5) Leitbleche (5b) zwischen seinen Rollen (5a) aufweist.

7. Vorrichtung nach einem der vorhergehenden Ansprüche, **dadurch gekennzeichnet, dass** sie, in der Förderrichtung (F) vorgelagert der Schwenkstütze (5), eine Zwischenstütze (4) aufweist, die mit der Schwenkstütze (5) in ihrer Stützposition ausgerichtet ist und auch in dieser Position bleiben kann, wenn die Schwenkstütze (5) geschwenkt wird.

8. Vorrichtung nach einem der vorhergehenden Ansprüche, **dadurch gekennzeichnet, dass** sie eine Steuerungseinheit (9) zum automatischen Auslösen des Schwenkens der Schwenkstütze (5) aufweist.

9. Vorrichtung nach Anspruch 8, **dadurch gekennzeichnet, dass** sie Mittel zum Detektieren der Position der Wurst (7) auf der Fördervorrichtung (2) aufweist, um ein Signal für die Steuerungseinheit zu erzeugen zum Auslösen des Schwenkens der Schwenkstütze.

10. Clipmaschine mit einer Vorrichtung zum Transportieren von Würsten von der Maschine mit einem Laufband, **dadurch gekennzeichnet, dass** die Vorrichtung zum Transportieren nach einem der Ansprüche 1 bis 9 konstruiert ist.

## Revendications

1. Dispositif pour transporter des saucisses (7) à partir d'une machine clippeuse (6), comprenant un dispositif de transport (2) ayant un plan de transport défini par la course supérieure d'une courroie transporteuse sans fin ou par l'axe plus rayon de rouleaux d'un transporteur à rouleaux ou par la surface de plaque d'une plaque de coulissement plane, sur lequel la saucisse (7) est transportée dans une direction de transport (F), **caractérisé en ce que** le plan de transport est incliné, agencé autour d'un axe d'inclinaison parallèle à la direction de transport (F) et un support pivotant (5) est agencé le long du côté longitudinal plus bas du dispositif de transport (2) en raison de l'inclinaison, qui peut pivoter autour d'un axe de pivotement parallèle à la direction de transport (F) entre une position de support et une position de libération.

2. Dispositif selon la revendication 1, **caractérisé en ce que** l'axe d'inclinaison est horizontal.

3. Dispositif selon l'une des revendications précédentes, **caractérisé en ce que** le dispositif de transport (2) est un tapis roulant.

4. Dispositif selon l'une des revendications précédentes, **caractérisé en ce que** l'axe de pivotement est agencé sur le côté supérieur.

5. Dispositif selon l'une des revendications précédentes, **caractérisé en ce que** le support pivotant (5) est un transporteur à rouleaux (5) dont des axes de rouleaux sont perpendiculaires à la direction de transport (F).

6. Dispositif selon la revendication 5, **caractérisé en ce que** le transporteur à rouleaux (5) a des plaques déflectrices (5b) entre ses rouleaux (5a).

7. Dispositif selon l'une des revendications précédentes, **caractérisé en ce qu'**il a, dans la direction de transport (F) en amont du support pivotant (5), un support intermédiaire (4) qui est aligné avec le support pivotant (5) dans sa position de support et peut également rester dans cette position lorsque le support pivotant (5) est mis en pivotement.

8. Dispositif selon l'une des revendications précédentes, **caractérisé en ce qu'**il a une unité de commande (9) pour automatiquement déclencher la mise en pivotement du support pivotant (5).

9. Dispositif selon la revendication 8, **caractérisé en ce qu'**il a des moyens pour détecter la position de la saucisse (7) sur le dispositif de transport (2) afin de créer un signal pour l'unité de commande pour déclencher la mise en pivotement du support pivotant.

10. Machine clippeuse ayant un dispositif pour transporter des saucisses à partir de la machine avec un tapis roulant, **caractérisée en ce que** le dispositif pour transporter est construit selon l'une des revendications 1 à 9.
